# FASCICULE DE BREVET EUROPEEN

(11) **EP 3 625 036 B1**
(45) Date de publication et mention de la délivrance du brevet: **22.05.2024**
(21) Numéro de dépôt: 18734864.4
(22) Date de dépôt: 04.05.2018
(51) Int. Cl.: B29C 65/72, B29C 65/56, B29C 65/64, B29C 65/08, B62D 3/12, B29K 59/00, B29K 77/00, B29K 705/02, B29L 31/30

(54) **PROCÉDÉ DE VEROUILLAGE PAR ULTRASONS D'UN BOUCHON EN PLASTIQUE OBTURANT UN CARTER DE DIRECTION**
VERFAHREN ZUR VERWENDUNG VON ULTRASCHALL ZUM VERRIEGELN EINES KUNSTSTOFFSTOPFENS ZUM VERSTOPFEN EINES LENKKASTENS
METHOD FOR USING ULTRASOUND TO LOCK A PLASTIC PLUG THAT PLUGS A STEERING BOX

(30) Priorité: 18.05.2017 FR 1754406
(43) Date de publication de la demande: 25.03.2020
(73) Titulaire: JTEKT Europe, 69540 Irigny (FR)
(72) Inventeur: VIZIER, Pascal, 69230 St Genis Laval (FR); GOUJON, Bruno, 69320 Feyzin (FR)
(74) Mandataire: Germain Maureau
(86) Numéro de dépôt international: PCT/FR2018/051132
(87) Numéro de publication internationale: WO 2018/211198

(56) Documents cités:
- EP-A2- 0 572 153
- CN-A- 1 836 887
- DE-A1-102009 019 189
- DE-A1-102010 000 866
- JP-A- H0 691 756
- US-A1- 2003 115 980

## Description

La présente invention concerne les procédés d'obturation permettant de fermer un orifice percé dans un carter, tel qu'un carter de direction, au moyen d'un bouchon en matière plastique.

Il est connu d'équiper les véhicules de systèmes de direction assistée qui comprennent généralement une crémaillère, montée coulissante dans un carter de direction, et sur laquelle engrène au moins un pignon qui peut être entraîné par un volant de conduite et/ou par un moteur d'assistance.

Afin de réduire les jeux d'engrènement entre la crémaillère et le pignon, il est connu de presser la crémaillère contre le pignon, transversalement à l'axe longitudinal de translation de ladite crémaillère, au moyen d'un poussoir à ressort.

Ledit poussoir peut comprendre, de façon connue en soi, un patin qui vient en appui glissant au dos de ladite crémaillère, diamétralement à l'opposé de la denture de la crémaillère qui engrène sur le pignon, ledit patin étant contraint en direction de la crémaillère et du pignon par un organe élastique de type ressort.

Le patin et le ressort sont montés et guidés dans une chemise, généralement métallique, qui forme une portion du carter de direction, et qui est obturée par un bouchon.

Le bouchon assure une fermeture étanche du carter, et sert de support au ressort.

Une difficulté rencontrée lors de l'assemblage tient au fait que ledit bouchon doit être positionné précisément dans l'orifice du carter de direction, dans une position précise dite « position de tarage », qui d'une part laisse subsister entre le patin et le bouchon un jeu fonctionnel juste nécessaire et suffisant pour permettre audit patin d'accommoder le débattement radial de la crémaillère, et qui d'autre part garantit un réglage calibré du degré de compression par défaut dudit ressort, et par conséquent un réglage de l'intensité de l'effort de rappel que ledit ressort exerce à l'encontre du patin et de la crémaillère.

En outre, le bouchon doit être verrouillé dans le carter de manière suffisamment solide pour ne pas se déplacer ni se détacher sous l'effet des chocs, des vibrations ou des variations thermiques subis par le carter lors de la vie du véhicule.

C'est pourquoi il est notamment connu de munir le bouchon d'un filet, qui permet de visser ledit bouchon dans la chemise du carter. Le verrouillage du bouchon en rotation peut alors s'effectuer par collage, en prévoyant de la colle entre le filet et le carter.

Un telle solution donne globalement satisfaction, mais souffre toutefois de certains inconvénients.

En effet, il faut tout d'abord tenir compte du temps de polymérisation (temps de séchage) de la colle.

Ce temps de séchage doit être suffisamment long pour autoriser la mise en place du bouchon dans le carter, puis l'ajustement ultérieur du vissage du bouchon, avant la prise définitive de la colle, afin de permettre le réglage précis de la position de tarage du bouchon dans le carter, et donc le réglage du jeu fonctionnel du poussoir.

Il n'est donc pas possible de contrôler immédiatement, sur la ligne industrielle de mise en place du bouchon, la qualité de la fixation du bouchon sur le carter, puisque la colle n'est pas encore durcie à ce stade.

Par ailleurs, une fois le bouchon collé, il est quasiment impossible de démonter ledit bouchon sans causer des dommages irréversibles audit bouchon, voire au carter lui-même, si bien qu'il n'est plus possible de rectifier ultérieurement le tarage du ressort.

De manière alternative, il existe des procédés de sertissage au cours desquels on réalise, après avoir vissé le bouchon, une déformation plastique forcée du carter, de manière à ovaliser la chemise pour y bloquer le bouchon.

Selon de tels procédés, on règle alors généralement la position de tarage du bouchon en forçant *a posteriori* un vissage ou un dévissage du bouchon, à l'encontre du carter ovalisé.

Bien entendu, de tels procédés sont, ici encore, susceptibles d'endommager le bouchon, voire d'endommager le carter, ou de dérégler le jeu fonctionnel entre le patin et le bouchon.

US2003115980 décrit un mécanisme d'engrenage à crémaillère et pignon comprenant: un boîtier; un arbre de pignon monté rotatif dans le boîtier; une crémaillère montée dans le boîtier et connectée fonctionnellement à l'arbre de pignon de manière à être déplaçable longitudinalement; et un dispositif de contre-pression pour compenser les forces de réaction entre l'arbre de pignon et la crémaillère, ledit dispositif de contre-pression comprenant une pièce de poussée, un écrou de réglage/fermeture et un ressort entre eux, dans lequel l'écrou de réglage/fermeture est composé d'un matériau ayant une température de ramollissement/fusion inférieure au boîtier et comprenant une partie qui est localement plastifiée ou fondue, et resolidifiée en engagement de verrouillage de forme avec le boîtier.

DE102009019189 décrit une connexion à vis de verrouillage comprenant un bouchon à vis en matière plastique avec un filetage extérieur, et une ouverture filetée avec un filetage intérieur sur un boîtier, dans laquelle le bouchon à vis est vissé.

DE102010000866 divulgue une vis de réglage pouvant être vissée dans un boîtier de direction, le boîtier de direction ayant une ouverture à visser et un filetage intérieur et entre l'ouverture de vissage et le début du filetage intérieur, une zone pourvue d'un diamètre intérieur au moins aussi grand que le diamètre de racine du filetage intérieur.

Les objets assignés à l'invention visent par conséquent à proposer un nouveau procédé d'obturation de carter qui permette d'assembler rapidement, à moindre coût, et de manière compacte et précise, un bouchon sur un carter, notamment un bouchon en matière plastique sur un carter métallique.

Les objets assignés à l'invention sont atteints au moyen d'un procédé d'obturation permettant d'obturer un orifice d'axe central (XX') percé dans une paroi, telle qu'une paroi de carter, au moyen d'un bouchon possédant un moyeu fileté pourvu d'au moins un filet, ledit procédé comprenant une étape (a) de vissage au cours de laquelle on visse le moyeu fileté du bouchon dans l'orifice en engageant le filet dudit moyeu contre la paroi, puis une étape (b) de verrouillage en rotation, au cours de laquelle on bloque la rotation du moyeu fileté autour de l'axe central (XX') afin de s'opposer au vissage et au dévissage du bouchon, ledit procédé étant caractérisé en ce que, lors de ladite étape (b) de verrouillage en rotation, on échauffe une portion du bouchon en matériau thermoplastique de sorte à ramollir ledit matériau thermoplastique, on force le matériau thermoplastique ramolli à pénétrer, puis à se solidifier, dans une cavité femelle creusée dans la paroi de l'orifice afin de constituer un organe mâle qui s'emboîte dans ladite cavité femelle, la cavité femelle étant agencée de telle sorte qu'elle forme à l'encontre de l'organe mâle une butée de guidage qui d'une part empêche la rotation de l'organe mâle, et donc du moyeu, autour de l'axe central (XX'), de manière à s'opposer à un mouvement rotatif de vissage ou de dévissage du bouchon, mais qui d'autre part préserve un degré de liberté en translation axiale, le long dudit axe central (XX'), dudit organe mâle au sein de ladite cavité femelle, de manière à ne pas faire obstacle à un coulissement du moyeu et de son filet le long de l'axe central (XX'), à l'encontre de la paroi. L'objet de la revendication 1 se caractérise en ce que la cavité femelle préserve un degré de liberté en translation axiale, le long dudit axe central, dudit organe mâle au sein de ladite cavité femelle, afin de ne pas faire obstacle à un coulissement du moyeu et de son filet le long de l'axe central, à l'encontre de la paroi.

Avantageusement, l'invention permet de combiner une fixation par vissage, qui assure une première fonction de retenue axiale du bouchon, avec une fixation par déformation thermoplastique qui assure une seconde fonction de blocage en rotation du bouchon.

La dissociation de ces fonctions, accomplies chacune par des organes distincts, permet avantageusement d'éviter une interférence négative entre ces deux fonctions. Ainsi, en particulier, le verrouillage en rotation, bien qu'il vienne compléter le vissage pour s'opposer à l'extraction du bouchon par dévissage, ne s'oppose pas, en revanche, à un ajustement axial léger dudit bouchon, en translation axiale, ce qui permet notamment de conserver, ou de retrouver après l'étape de verrouillage, un réglage fin des jeux fonctionnels du bouchon par rapport à un ou plusieurs organes mécaniques contenus dans le carter.

D'autres objets, caractéristiques et avantages de l'invention apparaîtront plus en détail à la lecture de la description qui suit, ainsi qu'à l'aide des dessins annexés, fournis à titre purement illustratif et on limitatif, parmi lesquels :
Les figures 1, 2 et 3 illustrent, selon des vues respectivement de côté, de dessus et en perspective, un exemple de bouchon destiné à être fixé par un procédé selon l'invention.
La figure 4 illustre, selon une vue en perspective, un exemple d'outil de mise en forme à quatre bras, tel qu'une sonotrode, destiné à mettre en forme les organes mâles.
La figure 5 est une vue de détail de l'empreinte d'extrémité des bras de l'outil de la figure 3.
La figure 6 illustre, selon une vue en coupe longitudinale, la mise en oeuvre de l'outil de la figure 4 sur un bouchon selon les figures 1 à 3 pour verrouiller en rotation ledit bouchon au sein d'un carter de direction.
La figure 7 illustre, selon une vue partielle de dessus, le bouchon verrouillé dans le carter, après mise en forme d'organes mâles radialement saillants.
La figure 8 illustre, selon une vue en coupe longitudinale, une première phase initiale d'une étape (b) de verrouillage en rotation selon l'invention lorsque l'on approche l'outil de la figure 4 au contact de la couronne du bouchon des figures 1 à 3.
Les figures 9 et 10 sont des vues de détail de la figure 8 permettant de visualiser les jeux axiaux initialement présents, après vissage du bouchon et avant application de la contrainte d'enfoncement par l'outil de mise en forme.
Les figures 11, 12, et 13 illustrent, selon des vues partielles en coupe longitudinale, l'enfoncement progressif de l'outil à l'encontre du bouchon, et la formation progressive correspondante des organes mâles en saillie radiale de la couronne dudit bouchon.
Les figures 14 et 15 sont des vues de détail correspondant aux figures 10 et 9 respectivement, et qui montrent les jeux axiaux résultant du transfert axial du filet du bouchon à l'encontre de la paroi de l'orifice pendant l'application de la contrainte d'enfoncement par l'outil.
La figure 16 illustre, selon une vue en coupe longitudinale, le bouchon verrouillé en rotation dans le carter, après retrait de l'outil.
La figure 17 est une vue de détail de la figure 16 faisant apparaître le retour axial du bouchon, en appui arrière contre la paroi, sous l'effet d'un organe élastique d'un poussoir de direction.
La figure 18 illustre, selon une vue partielle de côté, le détail d'une variante d'empreinte d'outil de mise en forme selon l'invention.
La figure 19 illustre, selon une vue partielle en coupe longitudinale, la mise en forme, au moyen de l'outil de la figure 18, d'organes mâles faisant saillie radiale exclusivement vers l'extérieur du moyeu du bouchon.

L'invention concerne un procédé d'obturation permettant d'obturer un orifice 1 d'axe central (XX') percé dans une paroi 2, telle qu'une paroi 2 de carter 3, au moyen d'un bouchon 4 possédant un moyeu 5 fileté pourvu d'au moins un filet 5T.

La paroi 2 est de préférence réalisée dans un matériau métallique, par exemple un alliage d'aluminium.

En variante, la paroi 2 du carter 3 pourra être réalisée dans un matériau plastique rigide.

En pareil cas, le matériau plastique constitutif de la paroi 2 du carter 3 sera différent du matériau constitutif du bouchon 4, afin notamment d'éviter tout soudage accidentel du bouchon 4 à la paroi du carter, en particulier lors de l'échauffement.

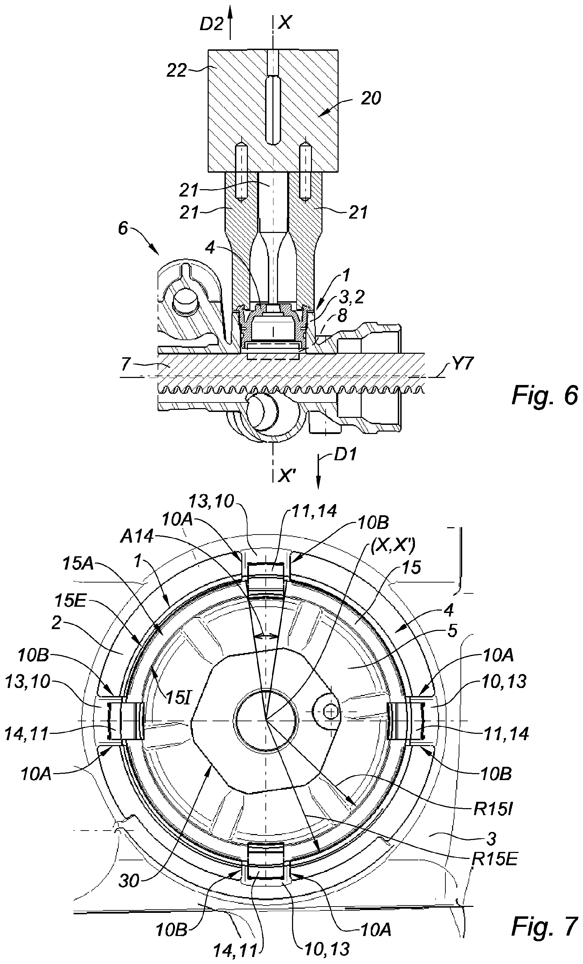

De préférence, le carter 3 est un carter de direction, utilisé pour protéger des organes mécaniques d'un système de direction assistée 6, incluant notamment une crémaillère 7, tel que cela est notamment illustré sur les figures 6, 8 et 16.

Plus particulièrement, le carter 3 pourra former la chemise d'un poussoir 8, et plus particulièrement d'un poussoir 8 à ressort 9 par exemple à ressort hélicoïdal 9, qui destiné à venir pousser, au moyen d'un patin 12 contraint par le ressort 9, la crémaillère 7 contre un pignon d'entraînement, afin de réduire les jeux et les bruits d'engrènement. Un tel poussoir 8 permettra entre autres de compenser les effets de l'usure.

On notera qu'un organe amortisseur en élastomère 31, tel qu'un joint torique amortisseur 31, pourra être prévu, en complément du ressort 9, entre le patin 12 et le bouchon 4, pour assurer le centrage du patin 12 et contribuer au rappel élastique dudit patin 12 contre la crémaillère 7.

L'orifice 1, de section circulaire, sera alors conçu pour permettre l'introduction du poussoir 8 dans le carter 3, et la mise en place dudit poussoir contre le dos de la crémaillère, à l'opposé de la denture de celle-ci.

Le bouchon 4, et plus particulièrement le moyeu 5 plein, aura pour rôle d'obturer le carter 3, de sorte à isoler l'intérieur du carter 3, contenant le mécanisme de poussoir 8, de l'environnement extérieur du carter 3.

Pour assurer une obturation étanche au moins à l'eau liquide ainsi qu'au lubrifiant, de sorte à empêcher l'eau de pénétrer dans le carter 3 par l'orifice et à retenir le lubrifiant, typiquement de la graisse, à l'intérieur du carter 3, le bouchon 4 comprendra de préférence un joint d'étanchéité 32, tel qu'un joint torique, interposé de préférence entre le moyeu 5 et la surface interne de la paroi de l'orifice 1.

Par commodité de description, on assimilera l'axe central (XX') de l'orifice 1 à l'axe central (axe de révolution) du bouchon 4 et à l'axe de poussée du poussoir, sensiblement perpendiculaire à l'axe Y7 de translation de la crémaillère 7.

De même, on désignera par « axiale » une direction parallèle ou confondue avec l'axe central (XX'), et par « radiale » une direction perpendiculaire audit axe central (XX').

Le procédé comprend une étape (a) de vissage au cours de laquelle on visse le moyeu 5 fileté du bouchon 4 dans l'orifice 1 en engageant le filet 5T dudit moyeu contre la paroi 2, et plus particulièrement contre un filet conjugué 2T de ladite paroi.

Ce vissage permet de faire pénétrer axialement le bouchon 4 dans l'orifice, de préférence de manière rentrante, c'est-à-dire non saillante axialement, par rapport à la surface apparente de la paroi 2 qui est visible et accessible depuis l'extérieur, et de retenir axialement le bouchon 4 pour empêcher son extraction selon l'axe central (XX').

Le procédé comprend ensuite une étape (b) de verrouillage en rotation, au cours de laquelle on bloque la rotation du moyeu fileté 5 autour de l'axe central (XX') afin de s'opposer au vissage et au dévissage du bouchon 4.

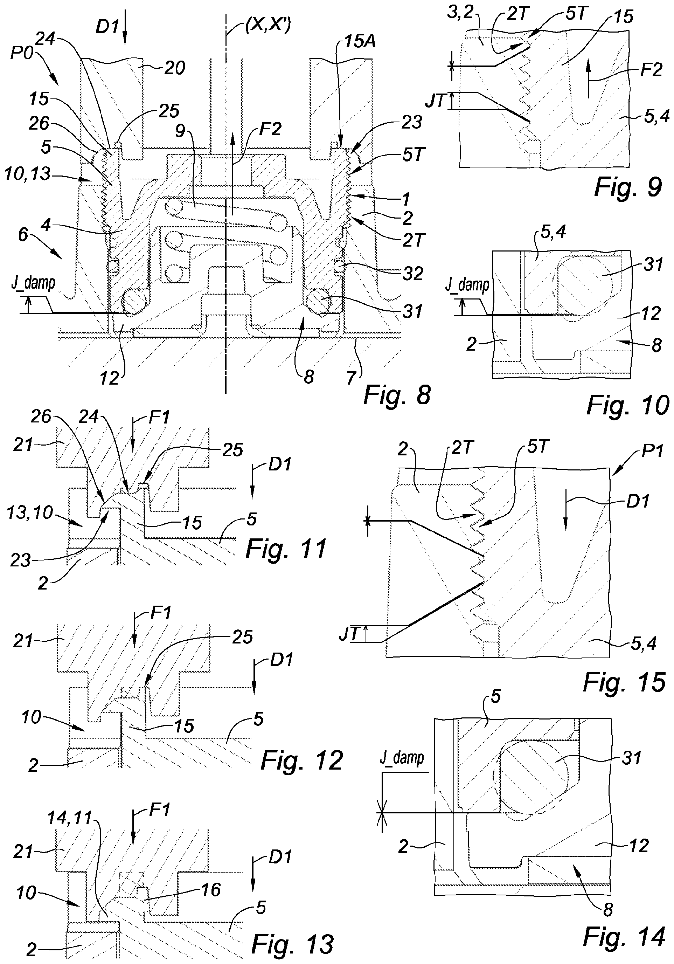

A cet effet, lors de ladite étape (b) de verrouillage en rotation, et tel que cela est illustré sur les figures 6, 11, 12, 13, on échauffe une portion du bouchon 4 en matériau thermoplastique, et plus particulièrement on échauffe une portion en matériau thermoplastique solidaire du moyeu 5 ou faisant partie intégrante dudit moyeu 5, de sorte à ramollir ledit matériau thermoplastique, et l'on force le matériau thermoplastique ramolli à pénétrer (figures 11 à 13, figure 19), puis à se solidifier (figure 6, figure 16, figure 19), dans une cavité femelle 10 creusée dans la paroi 2 de l'orifice 1 afin de constituer un organe mâle 11 qui s'emboîte dans ladite cavité femelle 10.

De préférence, le moyeu 5, et plus globalement le bouchon 4, est intégralement formé, de préférence d'un seul tenant, en matériau thermoplastique.

Ceci permet notamment d'alléger le bouchon, de le fabriquer par moulage au moyen d'un moule de forme simple, et de le remodeler localement pour former le ou les organes mâles 11.

Selon l'invention, la cavité femelle 10 est agencée de telle sorte qu'elle forme à l'encontre de l'organe mâle 11 une butée de guidage qui d'une part empêche la rotation de l'organe mâle 11, et donc du moyeu 5, autour de l'axe central (XX'), de manière à s'opposer à un mouvement rotatif de vissage ou de dévissage du bouchon 4, mais qui d'autre part préserve un degré de liberté en translation axiale, le long dudit axe central (XX'), dudit organe mâle 11 au sein de ladite cavité femelle 10, de manière à ne pas faire obstacle à un coulissement du moyeu 5 et de son filet 5T le long de l'axe central (XX'), à l'encontre de la paroi 2, et plus particulièrement à l'encontre du filet conjugué 2T de ladite paroi 2.

Le blocage en rotation procuré par l'organe mâle 11 contre la cavité femelle 10 est bidirectionnel, afin de s'opposer aussi bien au vissage qu'au dévissage du bouchon 4.

Ce blocage bidirectionnel du bouchon 4 en rotation vient avantageusement compléter le vissage pour empêcher l'extraction du bouchon 4 hors de l'orifice 1.

En outre, un tel blocage en rotation permet d'éviter, lorsque le système de direction assistée 6 est en fonctionnement, toute modification inopinée (due à un vissage ou un dévissage non désiré) de la position axiale du bouchon 4 par rapport au carter 3, et donc tout déréglage des éventuels jeux fonctionnels qui dépendent de la position axiale dudit bouchon 4, comme par exemple un jeu axial de suspension J_damp qui sera décrit plus bas.

Avantageusement, la cavité femelle 10 sert de moule au matériau thermoplastique pour former un organe mâle 11 qui est de forme idoine, conjuguée à ladite cavité femelle 10.

La forme de ladite cavité femelle 10 est choisie de telle sorte que l'axe central (XX') correspond à une direction de démoulage de l'organe mâle 11, c'est-à-dire de telle sorte que l'emboîtement de l'organe mâle 11 dans la cavité femelle 10 autorise encore un mouvement relatif de glissement de l'organe mâle 11, et donc du moyeu du bouchon 5 qui porte ledit organe mâle 11, en translation selon l'axe central (XX').

Ainsi, le bouchon 4 pourra conserver un certain degré de liberté en translation axiale, au moins dans les limites autorisée par le jeu axial de filet JT prévu entre le filet 5T du moyeu et le filet conjugué 2T de la paroi (figure 9).

Bien entendu, le matériau thermoplastique du bouchon 4 et le matériau, de préférence métallique, de la paroi 2 seront choisis de manière à ne pas adhérer l'un à l'autre, y compris suite au ramollissement et à la solidification du matériau thermoplastique au contact de la cavité femelle 10.

A titre indicatif, on pourra utiliser comme matériau thermoplastique, au sein du bouchon 4, du poly-oxy-méthylène (POM), du polyamide (PA) du polyphtalamide (PPA), éventuellement chargé de fibres de renfort, par exemple de fibres de verre.

On désigne par « sens d'enfoncement » D1 le sens dans lequel le bouchon 4 pénètre dans l'orifice 1 et s'enfonce vers l'intérieur du carter 3, en particulier lors du vissage, et par « sens d'extraction » D2 le sens opposé, orienté de l'intérieur vers l'extérieur du carter 3.

De préférence, lors de l'étape (a) de vissage, on visse le moyeu fileté dans l'orifice dans un sens dit « sens de pénétration » D1, à l'encontre d'un organe élastique 9, 31, tel que de préférence le ressort 9 du poussoir 8 susmentionné, de préférence complété par un joint torique amortisseur 31 comme indiqué plus haut.

Ledit organe élastique 9, 31 exerce sur ledit moyeu 5 un effort de rappel F2 orienté dans un sens opposé, dit « sens d'extraction » D2.

En fonctionnement, l'organe élastique 9, 31 et son effort de rappel F2 permettent de maintenir un jeu axial de suspension J_damp (illustré notamment sur les figures 8 et 10) entre le bouchon 4, qui forme la culasse fixe du poussoir 8, et le patin 12 suspendu élastiquement, qui vient presser le dos de la crémaillère 7. Ainsi, la crémaillère 7 peut accommoder d'éventuels jeux d'engrènement par de légers mouvements transverses, dans la limite du jeu de suspension J_damp.

Plus particulièrement, l'organe élastique 9, 31 tend donc à rappeler le filet du moyeu 5T en appui arrière contre la paroi 2, tel que cela est notamment illustré sur la figure 9, c'est-à-dire tend à rappeler les flancs arrière du filet de moyeu 5T, ici les flancs supérieurs sur la figure 9, orientés vers l'extérieur du carter, contre les flancs avant du filet conjugué de la paroi 2T, ici les flancs inférieurs, orientés vers l'intérieur du carter 3.

Lors de l'étape (a) de vissage, on poursuit le vissage jusqu'à ce que le moyeu 5 atteigne une position axiale souhaitée, dite « position de tarage » P0, correspondant aux figures 8, 9 et 10, dans laquelle le filet du moyeu 5T est pressé en appui arrière contre la paroi 2T par l'organe élastique 9, 31.

Cette position de tarage P0 correspond à une position de réglage, c'est-à-dire à un positionnement axial du bouchon 4 par rapport au poussoir 8 et à la crémaillère 7, qui procure un degré de compression du ressort 9, et plus globalement un degré de compression de l'organe élastique 9, 31, qui est tel que le jeu axial correspond à un jeu de suspension J_damp nominal souhaité, de préférence compris entre 50 µm et 100 µm, et par exemple égal à 60 µm, et que l'effort de rappel F2 correspond à un effort de rappel nominal choisi, par exemple compris entre 500 et 1000 N, et de préférence voisin de 600 N.

Selon l'invention, lors de l'étape (b) de verrouillage en rotation, on applique alors sur le bouchon 4, pour ramollir et repousser le matériau thermoplastique dans la cavité femelle 10, un outil de mise en forme 20 qui exerce un effort d'enfoncement F1 dans le sens de pénétration D1, tel que cela est illustré sur les figures 6, 8, 11 à 13 et 19.

Ledit effort d'enfoncement F1 tend ainsi à décoller le filet du moyeu 5T de son appui arrière, et à déplacer le bouchon 4 dans le sens de pénétration D1 par rapport à la position de tarage P0, tel que cela est visible sur la figure 15.

De préférence, au cours de l'étape de déformation thermoplastique du bouchon 4 et de la formation du ou des organes mâle 11, l'effort d'enfoncement F1 nécessaire à la formation correcte du ou des organes mâles peut dépasser l'effort de rappel F2 nominal, par exemple en atteignant une valeur de l'ordre de 650 N.

En pareil cas, l'effort d'enfoncement F1 comprime le ressort 9, et plus globalement l'organe élastique 9, 31, à l'encontre du patin 12 et de la crémaillère 7, en conférant ainsi temporairement au bouchon 4 une position P1 plus profonde que la position de tarage P0.

Ce faisant, on réduit provisoirement le jeu axial d'amortissement J_damp entre le patin 12 et le bouchon 4, et on peut même éventuellement amener le bouchon 4 au contact du patin 12, c'est-à-dire réduire provisoirement à zéro ledit jeu d'amortissement J_damp, tel que cela est illustré sur la figure 14.

Le cas échéant, l'effort d'enfoncement F1 peut amener le filet du moyeu 5T en appui avant contre le filet conjugué 2T de la paroi, c'est-à-dire presser les flancs avant du filet de moyeu 5T, ici les flancs inférieurs sur la figure 15, contre les flancs arrière du filet conjugué 2T de paroi, ici les flancs supérieurs.

Selon l'invention, une fois le ou les organes mâles 11 formés, on retire l'outil de mise en forme 20 de sorte à relâcher l'effort d'enfoncement F1 et à permettre au moyeu 5 et à l'organe mâle 11 d'effectuer, sous l'action de l'organe élastique 9, 31, un mouvement de retour dans la direction d'extraction D2, jusqu'à ce que le bouchon 4 retrouve sa position de tarage initiale P0, avec le filet du moyeu 5T pressé en appui arrière contre la paroi 2.

Avantageusement, la mobilité axiale autorisée par la coopération entre l'organe mâle 11 et la cavité femelle 10, et plus particulièrement le guidage axial en translation assuré par ladite coopération, permet au bouchon 4 de retrouver automatiquement son origine, par coulissement et mise en butée axiale arrière, après la création du ou des organes mâles 11 de verrouillage en rotation.

Ainsi, la mise en oeuvre du verrouillage en rotation n'affecte pas le réglage initial du jeu axial d'amortissement J_damp nominal et de l'intensité de l'effort de rappel F2 nominal qui correspondent à la position de tarage P0.

On peut donc régler finement la position de tarage P0 par un vissage précis du bouchon 4, puis procéder ensuite au verrouillage en rotation sans risque de modifier accidentellement ou de perdre ce réglage.

De préférence on prévoit dans la paroi 2 une cavité femelle 10 formée par au moins une encoche 13 qui s'ouvre sur l'orifice 1 et qui est délimitée en azimut autour de l'axe central (XX') par des surfaces, dites surfaces d'appui 10A, 10B, qui sont sensiblement parallèles audit axe central (XX').

Par « sensiblement parallèles à l'axe central (XX') », on indique que les surfaces d'appui 10A, 10B présente un angle d'inclinaison avec l'axe central (XX') qui est compris entre une valeur nulle, dans le cas où les surfaces d'appui sont exactement parallèles audit axe central (XX'), et une valeur maximale égale ou inférieure à 5 degrés, voire égale ou inférieure à 3 degrés, ou même égale ou inférieure à 2 degrés, et qui correspond alors à un angle de dépouille qui s'évase vers l'extérieur du carter 3.

Par commodité, on pourra assimiler cavité femelle 10 et encoche(s) 13 dans ce qui suit.

De préférence, lors de l'étape (b) de verrouillage en rotation, on peut alors repousser radialement le matériau thermoplastique ramolli dans ladite encoche 13 de manière à former au moins un ergot 14 qui forme un organe mâle 11 en saillie radiale par rapport au moyeu 5 et qui vient en appui glissant contre lesdites surfaces d'appui 10A, 10B, de sorte à être bloqué en rotation autour de l'axe central (XX') mais libre de glisser axialement (ici au moins dans le sens d'extraction D2) le long de l'axe central (XX'), tel que cela est notamment visible sur la figure 7.

Par commodité de description, on pourra assimiler organe mâle 11 et ergot(s) 14 dans ce qui suit.

Avantageusement, le ou les ergots 14 forment ainsi des ponts radiaux entre le moyeu et la paroi 2, en saillie radiale par rapport au filet 5T, et qui solidarisent le bouchon 4 et la paroi 2 en rotation par une sorte de clavetage.

L'utilisation d'encoches 13 possédant des surfaces d'appui 10A, 10B sensiblement parallèles à l'axe central (XX'), et de préférence d'encoches 13 qui sont axialement ouvertes sur la face extérieure visible de la paroi 2, dans la direction d'extraction D2, simplifie notamment la fabrication des cavités femelles, puisqu'il suffit de rainurer, ou de mouler en creux, par exemple selon un tracé en croisillon centré sur l'axe central (XX'), la surface apparente de la paroi 2, ou, plus particulièrement, le chant externe de la chemise cylindrique que définit ladite paroi 2.

On notera à ce titre qu'une fabrication des encoches 13 par usinage (rainurage) permet d'obtenir des surfaces d'appui 10A, 10B exactement parallèles à l'axe central (XX'), tandis qu'une fabrication par moulage nécessitera un léger angle de dépouille, typiquement inférieur ou égal à 5 degrés, de préférence à 3 degrés, voire à 2 degrés comme indiqué plus haut.

Avantageusement, un tel agencement des surfaces d'appuis 10A, 10B, planes et (sensiblement) parallèles à l'axe central (XX'), permet auxdites surfaces d'appui d'opposer une bonne résistance, selon une composante d'effort orthoradiale, au couple de vissage ou de dévissage du bouchon 4.

De préférence, et tel que cela est bien visible sur la figure 7, la cavité femelle 10 comporte une pluralité d'encoches 13 distinctes, réparties autour de l'axe central (XX'), et de préférence équiréparties autour de l'axe central (XX').

De préférence, lors de l'étape (b) de verrouillage en rotation, on forme alors simultanément une pluralité d'ergots 14 mâles distincts, qui pénètrent chacun dans l'une desdites encoche 13 et coopèrent chacun en appui glissant avec les surfaces d'appui 10A, 10B de leur encoche 13 respective.

La multiplication et la répartition angulaire des ensembles de verrouillage en rotation (ensembles ergot 14/encoche 13) permet notamment d'ajuster, et en particulier d'augmenter, la résistance au vissage/dévissage, mais également d'équilibrer les efforts de blocage en rotation, en offrant un couplage entre paroi 2 et bouchon 4 de type cannelures, tout en conservant des ergots relativement fins.

En outre, une telle répartition simplifie la fabrication des ergots 14, et autorise une réutilisation du bouchon 4 s'il s'avère nécessaire de modifier ultérieurement la position de tarage P0, comme il sera expliqué plus bas.

De préférence, on prévoira trois ou quatre encoches 13, et autant d'ergots 14, de préférence équirépartis autour de l'axe central (XX').

De préférence, lors de l'étape (b) de verrouillage en rotation, on applique contre le bouchon 4, pour ramollir puis repousser le matériau thermoplastique, un outil de mise en forme 20 qui est subdivisé, autour de l'axe central (XX'), en autant de bras 21 qu'il y a d'ergots mâles 14 à réaliser, chaque bras 21 couvrant un secteur angulaire qui correspond à l'encoche 23 qui est assignée audit bras 21 (et donc à l'ergot 14 concerné).

Avantageusement, l'utilisation d'un outil fractionné angulairement permet de cibler précisément l'échauffement, et ainsi de ne déformer thermo-plastiquement le bouchon 4 que dans les zones juste nécessaires et suffisantes pour réaliser les ergots 14.

L'utilisation de bras 21 multiples permet avantageusement de réaliser tous les ergots 14 simultanément, en une seule étape.

En outre, la multiplicité et la répartition, de préférence égale, des bras 21 autour de l'axe central (XX') confèrent à l'outil 20 une excellente stabilité et une grande résistance mécanique pendant que l'on applique l'effort d'enfoncement F1.

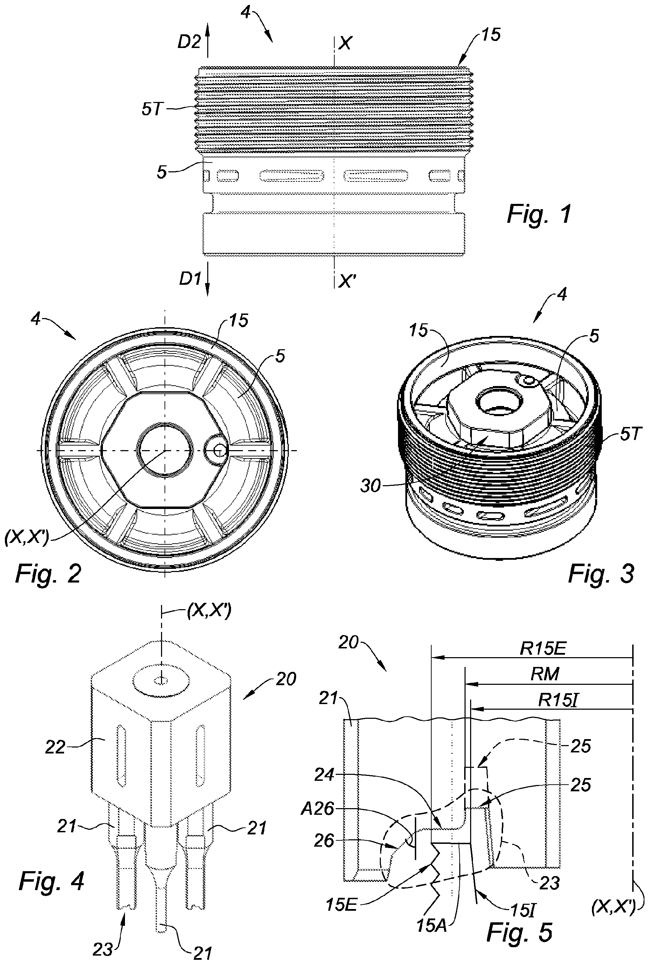

Tel que cela est illustré sur la figure 4, les (de préférence trois ou quatre) bras 21 prennent la forme de broches rigides, de préférence métalliques, portées par un même corps d'outil 22.

Selon une caractéristique préférentielle qui peut constituer une invention à part entière, le moyeu 5 du bouchon 4 présente une couronne périphérique 15 en matériau thermoplastique, qui forme un cylindre creux centré sur l'axe central (XX') et qui présente une face radialement externe 15E qui porte au moins en partie le filet du moyeu 5T, ainsi qu'une face radialement interne 151 qui est (et reste) accessible depuis l'extérieur lorsque le moyeu 5 est vissé dans l'orifice 1.

De préférence, lors de l'étape (b) de verrouillage en rotation, on peut alors ramollir partiellement la couronne 15, dans chaque zone située angulairement en vis-à-vis d'une encoche 13, puis, dans chaque zone ainsi ramollie, repousser le matériau thermoplastique constitutif de la couronne au moins selon une direction radiale centrifuge pour faire pénétrer ledit matériau thermoplastique ramolli dans l'encoche 13 qui lui correspond, et ainsi constituer un ergot mâle 14 d'un seul tenant avec la couronne 15 (et donc plus globalement d'un seul tenant avec le moyeu 5), tel que cela est illustré sur les figures 6, 7, 11, 12, 13, 16 et 19.

Une telle couronne 15 facilite la fabrication des ergots 14, notamment du fait que, en raison de son épaisseur radiale relativement fine, ladite couronne 15 n'a besoin que de peu de chaleur pour être déformée localement par l'outil 20, tout en présentant une bonne rigidité, et donc une bonne résistance à la déformation, dans les autres secteurs angulaires, non ciblés par l'échauffement.

En outre, tel que cela sera détaillé plus bas, il est avantageusement possible de procéder à la déformation thermoplastique appliquant les bras 21 de l'outil 20 sur le chant 15A apparent de ladite couronne 15, et ainsi, grâce à une géométrie de bras 21 adaptée, d'orienter finement l'échauffement ainsi que la poussée exercée sur le matériau thermoplastique.

De préférence, chaque bras 21 présente une extrémité qui est destinée à entrer en contact avec le chant 15A de la couronne 15 et à s'enfoncer dans ladite couronne 15 selon un mouvement de pénétration axial, ici selon le sens d'enfoncement D1, et qui est notamment illustré par la succession des figures 11, 12 et 13, de manière à repousser progressivement dans la cavité femelle 10 le matériau thermoplastique ramolli.

Par commodité de description, on pourra assimiler mouvement de pénétration et sens d'enfoncement D1.

Tel que cela est illustré sur les figures 5 et 7, le chant 15A de la couronne 15 s'étend radialement entre un rayon interne R15I, correspondant à la face radialement interne 151 de la couronne, et un rayon radialement externe R15E correspondant à la face radialement externe 15E de ladite couronne.

De préférence, l'extrémité du bras 21 considérée présente une empreinte 23 qui comprend, en coupe dans un plan de coupe longitudinal contenant l'axe central (XX'), et tel que cela est bien visible sur la figure 5, au moins un premier rebord 24 et un déflecteur 26 incliné, et éventuellement un second rebord 25, tels que définis ci-après.

Le premier rebord 24 est agencé pour venir le premier en appui, lorsque l'outil de mise en forme 20 est amené au contact du bouchon 4, selon le sens d'enfoncement D1, contre une portion radialement externe du chant 15A de la couronne.

Tel que cela est illustré sur la figure 5, ledit premier rebord 24 s'étend à cet effet, de façon radiale centrifuge (c'est-à-dire si l'on considère que l'on parcourt ledit premier rebord 24 en s'éloignant de l'axe central (XX')), depuis un rayon intermédiaire RM strictement compris entre le rayon interne R15I et le rayon externe R15E jusqu'au, ou au-delà du, rayon externe R15E de ladite couronne, afin de concentrer initialement, dans un premier temps illustré sur la figure 11, l'apport d'énergie vers l'extérieur et ainsi favoriser le ramollissement et la migration radiale centrifuge du matériau thermoplastique.

Par « migration radiale centrifuge », on désigne un mouvement sensiblement radial du matériau thermoplastique ramolli dans un sens qui tend à éloigner ledit matériau de l'axe central (XX'), pour opérer un transfert radial dudit matériau vers l'extérieur du moyeu 5.

Selon une possibilité d'agencement, on peut prévoir un second rebord 25 qui est placé axialement en retrait du premier rebord 24 par rapport à la direction D1 du mouvement de pénétration, et qui couvre radialement une portion radialement interne du chant 15A de la couronne, formant la partie complémentaire de la portion radialement externe dudit chant 15A de la couronne.

Ledit second rebord 25 s'étend à cet effet, dans la direction radiale centripète, depuis le rayon intermédiaire RM jusqu'au, ou au-delà du rayon interne R15I de ladite couronne (c'est-à-dire aussi près, ou plus près, de l'axe central (XX') que la face interne 15I de la couronne).

Selon une première variante de mise en oeuvre, le second rebord 25 est ainsi agencé pour venir au contact de la couronne 15 après que le premier rebord 24 a commencé à pénétrer axialement dans, et à déformer plastiquement, la portion radialement externe de ladite couronne, de sorte à participer dans un second temps, illustré sur les figures 12 et 13, à la déformation plastique de la couronne.

Ainsi, l'agencement étagé des premier et second rebords 24, 25 permet avantageusement de privilégier un mouvement de reflux progressif du matériau thermoplastique vers l'extérieur de la couronne 15 en deux temps, en commençant par le rebord externe puis en poursuivant avec le rebord interne, ce qui permet de diriger le matériau principalement en saillie du moyeu 5, où il participe à la formation de l'ergot 14 utile, et ainsi de limiter la formation d'un copeau de matière perdue 16 sur la face interne 151 de la couronne 15.

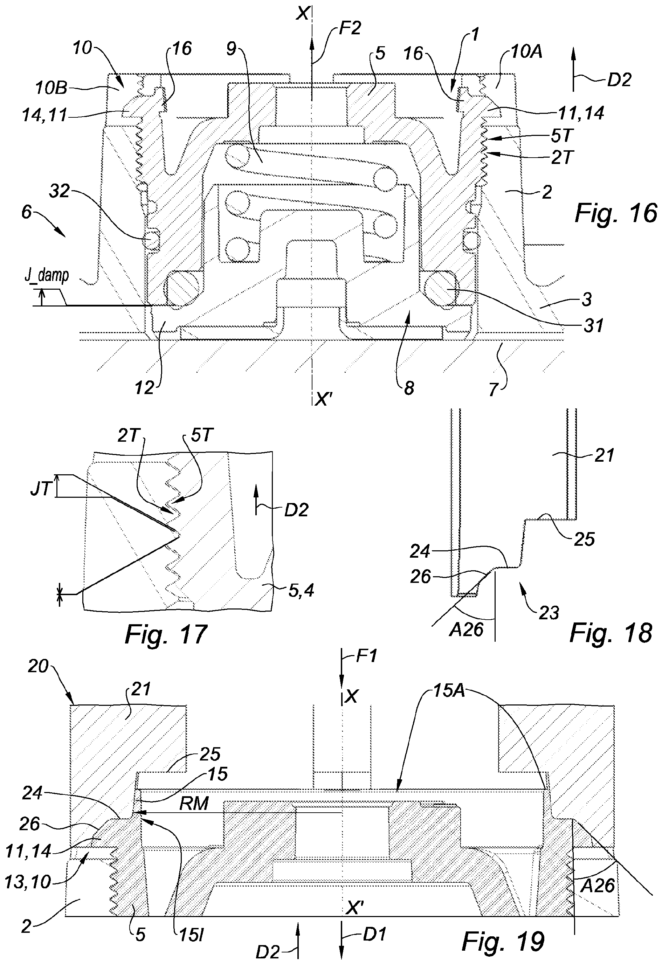

Selon une seconde variante de mise en oeuvre, tel que cela est illustré en pointillés sur la figure 5, ou bien encore sur les figures 18 et 19, le second rebord 25 pourra être situé en retrait axial à une distante suffisante pour ne pas entrer en contact avec la couronne 15 lors de la mise en forme du ou des ergots 14.

A cet effet, la distance axiale séparant le premier rebord 24 du second rebord 25 sera supérieure à la course axiale (prédéterminée) de l'outil de mise en forme 20 qui est nécessaire à la formation du ou des ergots 14.

On évite ainsi de toucher avec le bras 21 de l'outil 20 la portion radialement interne du chant 15A de la couronne, et donc on évite ainsi de chauffer et de déformer le matériau thermoplastique dans cette zone.

De la sorte, on forme uniquement des ergots 14 "sortants", utiles au blocage en rotation, mais pas de copeaux "rentrants" de matière perdue 16 sur la face interne de la couronne 15, ce qui permet d'améliorer l'aspect esthétique final du carter obturé par le bouchon 4.

Plus particulièrement, et tel que cela est illustré sur la figure 19, on pourra utiliser la portion radialement interne de la couronne 15, non affectée par la mise en forme thermoplastique, comme barrière de support empêchant la pénétration radiale centripète du matériau ramolli dans la portion évidée interne du moyeu 5, ce qui permettra de conserver une finition lisse et régulière, sans bavure, correspondant à la surface interne 151 cylindrique d'origine de la couronne 15.

Par ailleurs, que l'on prévoie ou non un second rebord 25, et que ce second rebord 25 soit agencé pour venir ou non en appui contre le chant 15A de la couronne 15, l'empreinte 23 comprendra de préférence un déflecteur incliné 26 (externe).

Le déflecteur incliné 26, qui prolonge le premier rebord 24 à la fois radialement, dans la direction radiale centrifuge, et axialement dans le sens du mouvement de pénétration D1, forme une dépouille (pente) A26 par rapport à l'axe central (XX').

Ainsi, le déflecteur incliné 26 peut, lors de l'enfoncement axial de l'outil 20 dans la couronne 15, guider radialement vers l'extérieur et compacter le matériau thermoplastique ramolli afin de former l'ergot 14 en saillie sur la face radialement externe 15E de la couronne 15.

Bien entendu, la largeur radiale de l'empreinte 23, c'est-à-dire l'étendue radiale de l'ouverture en creux que délimite l'empreinte 23 à l'extrémité du bras 21, et plus particulièrement l'étendue radiale cumulée du premier rebord 24 et du second rebord 25 sera supérieure à l'épaisseur radiale R15E - R15I de la couronne 15, de sorte à permettre à l'empreinte 23 de recouvrir et d'enjamber entièrement la couronne, et ainsi de guider efficacement le matériau ramolli.

En particulier, on pourra prévoir une largeur radiale de l'empreinte 23, et plus particulièrement une largeur radiale cumulée des premier et second rebords 24, 25, qui soit strictement supérieure à l'épaisseur radiale du chant 15A de la couronne d'une valeur prédéfinie, correspondant à un jeu radial permettant à l'empreinte 23, et plus particulièrement aux premier et second rebords 24, 25, d'accommoder d'éventuelles tolérances radiales de fabrication du bouchon 24 et/ou de positionnement de l'outil 20, et donc du bras 21, par rapport au bouchon 24 et à la couronne 15.

On notera que, avantageusement, sur la variante des figures 18 et 19, l'ouverture radiale directe du second rebord 25 (et donc de l'empreinte 23) sur l'intérieur de l'outil 20 (c'est-à-dire en direction de l'axe central (XX')), en retrait axial du premier rebord 24 et du chant 15A de la couronne 15, garantit l'absence d'interférence entre l'outil 20 de mise en forme et la surface radialement interne 15I de ladite couronne 15.

De préférence, le premier rebord 24 et le second rebord 25 seront perpendiculaires à l'axe central (XX'), et plus particulièrement perpendiculaires à la normale à la surface du bouchon 4, ici perpendiculaires à la normale au chant 15A supérieur de la couronne 15, avec laquelle l'outil de mise en forme 20 entre en contact.

Avantageusement, un tel agencement perpendiculaire permettra notamment d'appliquer plus efficacement l'énergie d'échauffement au bouchon 4, en particulier si ladite énergie est véhiculée par martelage de la surface du bouchon au moyen d'un outil de mise en forme 20 à ultrasons.

De préférence, les bords formant les limites radiales de l'empreinte 23 présenteront une dépouille par rapport à l'axe central (XX'), par exemple de l'ordre de 1 degré à 5 degrés, voire davantage, pour favoriser le retrait de l'outil 20 après thermoformage des ergots 14, sans risque de déformer ou d'arracher lesdits ergots 14.

Plus globalement, l'empreinte 23 présentera, vis-à-vis de la couronne 15 et des ergots 14, une forme démoulable selon l'axe central (XX').

De préférence, la couverture angulaire A14 de chaque ergot 14, en azimut autour de l'axe central (XX'), et considérée à la base dudit ergot 14 à la limite radiale entre le bouchon 4 et l'encoche 13, est inférieure ou égale à 30 degrés, et de préférence comprise entre 10 degrés et 20 degrés, par exemple sensiblement égale à 15 degrés.

De manière complémentaire ou équivalente, on pourra considérer que les ergots 14, et plus particulièrement les encoches 13, présentent des longueur d'arc, considérées à la limite radiale entre le bouchon 4 et l'encoche 13, qui sont inférieures ou égales à 10 mm, et par exemple comprises entre 5 mm et 7 mm, en particulier pour un rayon de moyeu typiquement compris entre 35 mm et 45 mm, par exemple pour un moyeu fileté 5 de taille M40.

On notera par ailleurs que chaque encoche 13 sera plus large, dans la direction orthoradiale par rapport à l'axe central (XX'), que l'extrémité du bras 21 correspondant de l'outil de mise en forme 20, de sorte à prévoir un jeu orthoradial d'insertion, de préférence de l'ordre de 1 mm à 2 mm, qui permet à l'outil de mise en forme 20 de former les ergots 14 sans interférer avec le carter 3.

Avantageusement, en restreignant l'étendue de chaque ergot 14, on diminue la quantité d'énergie nécessaire à la thermo-formation.

En outre, cette faible étendue favorise la miniaturisation des bras 21 de l'outil, et facilite donc l'accès au bouchon 4 lors de l'étape (a) de verrouillage en rotation.

Enfin, cette limitation de l'étendue des ergots 14, et donc de leur résistance aux moments tranchants, permet de définir un seuil de rupture conférant aux ergots 14 une nature sécable, qui permet au besoin de réajuster ultérieurement le vissage (ou dévissage) du bouchon 4.

Ainsi, selon une possible variante de l'invention, qui peut constituer une invention à part entière, le procédé comprend, après au moins une étape (a) de vissage et une étape (b) de verrouillage en rotation, une étape (c) de déverrouillage forcé, au cours de laquelle on vient en prise sur un organe de manipulation 30 prévu sur le bouchon 4, tel qu'une empreinte mâle ou femelle à six pans creux formée dans le moyeu, et l'on force la rotation du moyeu autour de l'axe central (XX') en brisant l'organe mâle, puis une étape (d) de réglage, au cours de laquelle on visse ou l'on dévisse le moyeu 5 afin de modifier sa position axiale par rapport à l'orifice 1, puis une nouvelle étape (b') de verrouillage en rotation au cours de laquelle on forme, en ramollissant et en repoussant dans la cavité femelle 10, 13 une nouvelle portion en matériau thermoplastique du même bouchon 4, un nouvel organe mâle 11', 14' qui est décalé angulairement par rapport à l'organe mâle 11, 14 d'origine (précédemment détruit), afin de bloquer le moyeu 5 en rotation autour de l'axe central (XX') tout en conservant un degré de liberté en translation axiale par rapport audit axe central (XX').

En d'autres termes l'invention permet de prévoir des ergots 14 sécables, qui résistent au dévissage/vissage en conditions normales d'utilisation, et notamment en cas de vibrations affectant le véhicule, mais qui peuvent être détruits en forçant la rotation du bouchon 4 au moyen d'un outil, du genre clef, avec lequel on exerce un couple de manoeuvre supérieur à un couple seuil prédéterminé.

La nouvelle étape (b') de verrouillage correspond en tous points à l'étape (b) de verrouillage décrite plus haut, qui est simplement répétée, après que l'on a brisé et éliminé le premier jeu d'ergots 14, pour recréer, en vis-à-vis des mêmes encoches 13, un nouveau jeux d'ergots 14', décalés angulairement par rapport au premier jeu 14, sur la même couronne 15 du même bouchon 4, qui peut ainsi avantageusement être réutilisé.

Ainsi, on peut notamment corriger la position de tarage P0 si le premier réglage est défectueux, ou pour compenser ultérieurement l'usure du poussoir 8.

On notera que l'utilisation du signe ' après les références numériques a pour simple but de distinguer deux éléments, ici deux ergots 14, 14', de même nature mais réalisés à des étapes de verrouillage (b), (b') distinctes.

Bien entendu, l'organe de manipulation 30 pourra être formé par toute empreinte, mâle ou femelle, appropriée, et notamment par toute empreinte polygonale, par exemple carrée, hexagonale (six pans), cannelée, en étoile, etc.

Selon une possibilité de mise en oeuvre du procédé, l'échauffement nécessaire au ramollissement du matériau thermoplastique pourra être obtenu en soufflant de l'air chaud sur la ou les portions concernées du bouchon 4.

Une fois le matériau thermoplastique ramolli, ledit matériau pourra être mise en forme par un ou des bras 21 d'outil 20 tel que mentionnés plus haut.

Avantageusement, une telle technique par soufflage d'air chaud permet d'obtenir des ergots 14 particulièrement solides, présentant une très bonne résistance au vissage/dévissage.

Toutefois, selon une possibilité préférentielle de mise en oeuvre, on utilise, comme outil de mise en forme 20 pour ramollir par échauffement une portion du bouchon 4 en matériau thermoplastique puis repousser le matériau thermoplastique ramolli dans la cavité femelle 10, un appareil à ultrasons, dit « sonotrode ».

Les bras 21 serviront alors avantageusement d'éléments vibrants, qui viendront marteler la couronne 15 du moyeu 5.

Avantageusement, une telle technique de mise en forme par ultrasons permet de réduire à environ 6 secondes le temps de cycle, par rapport aux 20 secondes nécessaires pour la technique de soufflage d'air chaud.

De façon particulièrement préférentielle, la fréquence de la sonotrode est supérieure à 20 kHz, de préférence supérieure à 30 kHz, et de préférence égale à 35 kHz.

Avantageusement, ce choix de fréquences permet de localiser l'échauffement, et d'éviter notamment une soudure accidentelle du bouchon 4 au patin 12 du poussoir 8, ou bien une dégradation du joint torique amortisseur 31 qui prévu entre le patin 12 du poussoir 8 et le moyeu 5 du bouchon.

On notera également que la fréquence de la sonotrode 20 sera de préférence choisie de telle sorte que l'effort axial total exercé par la sonotrode 20 contre le bouchon 4, dans le sens d'enfoncement D1, tel que ledit effort résulte de l'application mécanique (c'est-à-dire du maintien et de l'enfoncement axial progressif) de la sonotrode contre ledit bouchon 4 et du martelage provoqué par les ultrasons, reste inférieur à l'effort de rappel F2 exercé par l'organe élastique (ici formé par l'ensemble ressort 9 et joint torique amortisseur 31), de sorte à éviter de souder localement et accidentellement le bouchon 4 au patin 12, lorsque ledit patin 12 est également en matière plastique.

L'invention concerne bien entendu en tant que tel un système de direction assistée 6 comprenant au moins un mécanisme logé dans un carter 3 de direction qui est obturé par un bouchon 1 conformément à un procédé selon l'une quelconque des variantes de mise en oeuvre de l'invention.

L'invention concerne enfin un outil 20 de mise en forme par ultrasons destiné à verrouiller en rotation un bouchon 4 préalablement vissé dans un orifice 1, ledit outil de mise en forme 20 comprenant un corps 22 qui s'étend selon un axe central (XX') et qui porte une pluralité de bras 21 distincts, répartis autour de l'axe (XX'), lesdits bras 21 étant agencés pour transmettre des ondes ultrasonores au bouchon 4, au niveau du pourtour dudit bouchon, afin de pouvoir échauffer et ramollir localement, de façon simultanée, différentes portions périphériques du bouchon 4, situées dans des secteurs angulaires distincts autour de l'axe central (XX') et réalisées en matériau thermoplastique, et afin de pouvoir repousser, selon au moins une direction radiale centrifuge le matériau thermoplastique ainsi ramolli dans chaque secteur angulaire concerné, lorsque l'on presse axialement l'outil 20 contre le bouchon 4 pour exercer une contrainte d'enfoncement F1, de manière à faire saillir radialement sur ledit bouchon 4, dans ledit secteur angulaire, un ergot 14 qui s'enclenche dans une encoche 13 correspondante prévue dans une paroi 2 de l'orifice 1, selon un agencement tel que l'ergot 14 vienne buter en rotation contre les surfaces d'appui 10A, 10B délimitant ladite encoche 13 tout en conservant une liberté de glissement axial contre lesdites surfaces d'appui 10A, 10B.

## Revendications

1. Procédé d'obturation permettant d'obturer un orifice (1) d'axe central (XX') percé dans une paroi (2), telle qu'une paroi de carter (3), au moyen d'un bouchon (4) possédant un moyeu fileté (5) pourvu d'au moins un filet (5T), ledit procédé comprenant :
- une étape (a) de vissage au cours de laquelle on visse le moyeu fileté (5) du bouchon (4) dans l'orifice (1) en engageant le filet (5T) dudit moyeu contre la paroi (2), dans un sens dit « sens de pénétration » (D1), à l'encontre d'un organe élastique (9, 31) qui exerce sur ledit moyeu un effort de rappel (F2) orienté dans un sens opposé, dit « sens d'extraction » (D2), de telle sorte que ledit organe élastique (9, 31) tend à rappeler le filet du moyeu (5T) en appui arrière contre la paroi (2), et l'on poursuit le vissage jusqu'à ce que le moyeu (5) atteigne une position axiale souhaitée, dite « position de tarage » (P0), dans laquelle le filet du moyeu (5T) est pressé en appui arrière contre la paroi (2) par l'organe élastique (9, 31),
- puis une étape (b) de verrouillage en rotation, au cours de laquelle on bloque la rotation du moyeu fileté (5) autour de l'axe central (XX') afin de s'opposer au vissage et au dévissage du bouchon (4),
ledit procédé étant **caractérisé en ce que**, lors de ladite étape (b) de verrouillage en rotation, on échauffe une portion du bouchon (4) en matériau thermoplastique de sorte à ramollir ledit matériau thermoplastique, on force le matériau thermoplastique ramolli à pénétrer, puis à se solidifier, dans une cavité femelle (10) creusée dans la paroi de l'orifice afin de constituer un organe mâle (11) qui s'emboîte dans ladite cavité femelle, la cavité femelle (10) étant agencée de telle sorte qu'elle forme à l'encontre de l'organe mâle (11) une butée de guidage qui d'une part empêche la rotation de l'organe mâle (11), et donc du moyeu (5), autour de l'axe central (XX'), de manière à s'opposer à un mouvement rotatif de vissage ou de dévissage du bouchon (4), mais qui d'autre part préserve un degré de liberté en translation axiale, le long dudit axe central (XX'), dudit organe mâle (11) au sein de ladite cavité femelle (10), de manière à ne pas faire obstacle à un coulissement du moyeu (5) et de son filet (5T) le long de l'axe central (XX'), à l'encontre de la paroi (2), **en ce qu'**on prévoit, dans la paroi, une cavité femelle (10) formée par au moins une encoche (13) qui s'ouvre sur l'orifice (1) et qui est délimitée en azimut autour de l'axe central (XX') par des surfaces, dites surfaces d'appui (10A, 10B), qui sont sensiblement parallèles audit axe central (XX'), et **en ce que**, lors de l'étape (b) de verrouillage en rotation, on repousse radialement le matériau thermoplastique ramolli dans ladite encoche (13) de manière à former au moins un ergot (14) qui forme un organe mâle (11) en saillie radiale par rapport au moyeu et qui vient en appui glissant contre lesdites surface d'appui (10A, 10B), de sorte à être bloqué en rotation autour de l'axe central (XX') mais libre de glisser axialement le long de l'axe central (XX'), lors de l'étape (b) de verrouillage en rotation, on applique sur le bouchon (4), pour ramollir et repousser le matériau thermoplastique dans la cavité femelle (10), un outil de mise en forme (20) qui exerce un effort d'enfoncement (F1) dans le sens de pénétration (D1), ledit effort d'enfoncement (F1) tendant ainsi à décoller le filet du moyeu (5T) de son appui arrière, et à déplacer le bouchon (4) dans le sens de pénétration (D1) par rapport à la position de tarage (P0), puis **en ce que**, une fois l'organe mâle (11) formé, on retire l'outil de mise en forme (20) de sorte à relâcher l'effort d'enfoncement (F1) et à permettre au moyeu (5) et à l'organe mâle (11) d'effectuer, sous l'action de l'organe élastique (9, 31), un mouvement de retour dans la direction d'extraction (D2), jusqu'à ce que le bouchon (4) retrouve sa position de tarage (P0) initiale, avec le filet du moyeu (5T) pressé en appui arrière contre la paroi (2).

2. Procédé selon la revendication 1, **caractérisé en ce que** la cavité femelle (10) comporte une pluralité d'encoches distinctes (13), réparties autour de l'axe central (XX'), et **en ce que**, lors de l'étape (b) de verrouillage en rotation, on forme simultanément une pluralité d'ergots (14) mâles distincts, qui pénètrent chacun dans l'une desdites encoche (13) et coopèrent chacun en appui glissant avec les surfaces d'appui (10, 10B) de leur encoche (13) respective.

3. Procédé selon la revendication 2 au cours duquel, lors de l'étape (b) de verrouillage en rotation, on applique contre le bouchon (4), pour ramollir puis repousser le matériau thermoplastique, un outil de mise en forme (20) qui est subdivisé, autour de l'axe central (XX'), en autant de bras (21) qu'il y a d'ergots mâles (14) à réaliser, chaque bras (21) couvrant un secteur angulaire qui correspond à l'encoche (13) qui est assignée audit bras.

4. Procédé selon l'une des revendications 1 à 3 **caractérisé en ce que** le moyeu (5) du bouchon (4) présente une couronne (15) périphérique en matériau thermoplastique, qui forme un cylindre creux centré sur l'axe central (XX') et qui présente une face radialement externe (15E) qui porte au moins en partie le filet (5T) du moyeu, ainsi qu'une face radialement interne (15I) qui est accessible depuis l'extérieur lorsque le moyeu (5) est vissé dans l'orifice (1), et **en ce que**, lors de l'étape (b) de verrouillage en rotation, on ramollit partiellement la couronne (15), dans chaque zone située angulairement en vis-à-vis d'une encoche (13), puis, dans chaque zone ainsi ramollie, on repousse le matériau thermoplastique constitutif de la couronne au moins selon une direction radiale centrifuge pour faire pénétrer ledit matériau thermoplastique ramolli dans l'encoche (13) qui lui correspond, et ainsi constituer un ergot mâle (14) d'un seul tenant avec la couronne (15).

5. Procédé selon les revendications 3 et 4 **caractérisé en ce que** chaque bras (21) présente une extrémité qui est destinée à entrer en contact avec le chant (15A) de la couronne (15) qui s'étend radialement entre un rayon interne (R15I), correspondant à la face radialement interne (15I) de la couronne, et un rayon radialement externe (R15E) correspondant à la face radialement externe (15E) de ladite couronne, et à s'enfoncer dans ladite couronne (15) selon un mouvement de pénétration axial pour repousser progressivement dans la cavité femelle (10) le matériau thermoplastique ramolli, ladite extrémité (21) présentant une empreinte (23) qui comprend, en coupe dans un plan de coupe longitudinal contenant l'axe central (XX') :
- un premier rebord (24), agencé pour venir le premier en appui contre une portion radialement externe du chant (15A) de la couronne, et qui s'étend à cet effet de façon radiale centrifuge depuis un rayon intermédiaire (RM) strictement compris entre le rayon interne (R15I) et le rayon externe (R15E) jusqu'au, ou au-delà du, rayon externe (R15E) de ladite couronne, afin de concentrer initialement l'apport d'énergie vers l'extérieur et ainsi favoriser le ramollissement et la migration radiale centrifuge du matériau thermoplastique,
- un déflecteur (26) incliné, qui prolonge le premier rebord 24 à la fois radialement, dans la direction radiale centrifuge, et axialement dans le sens du mouvement de pénétration (D1), et qui forme une dépouille (A26) par rapport à l'axe central (XX'), de sorte à pouvoir guider radialement vers l'extérieur et compacter le matériau thermoplastique ramolli afin de former l'ergot (14) en saillie sur la face radialement externe (15E) de la couronne, lors de l'enfoncement axial de l'outil (20) dans la couronne (15).

6. Procédé selon l'une des revendications 1 à 5 **caractérisé en ce que** la couverture angulaire (A14) de chaque ergot (14), en azimut autour de l'axe central (XX'), et considérée à la base dudit ergot (14) à la limite radiale entre le bouchon (4) et l'encoche (13), est inférieure ou égale à 30 degrés, et de préférence comprise entre 10 degrés et 20 degrés.

7. Procédé selon l'une des revendications précédentes **caractérisé en ce qu'**il comprend une étape (c) de déverrouillage forcé, au cours de laquelle on vient en prise sur un organe de manipulation (30) prévu sur le bouchon, tel qu'une empreinte mâle ou femelle à six pans creux formée dans le moyeu, et l'on force la rotation du moyeu (5) autour de l'axe central (XX') en brisant l'organe mâle (11, 14), puis une étape (d) de réglage, au cours de laquelle on visse ou l'on dévisse le moyeu (5) afin de modifier sa position axiale par rapport à l'orifice (1), puis une nouvelle étape (b') de verrouillage en rotation au cours de laquelle on forme, en ramollissant et en repoussant dans la cavité femelle (10) une nouvelle portion en matériau thermoplastique du même bouchon (4), un nouvel organe mâle (11', 14') qui est décalé angulairement par rapport à l'organe mâle (11) d'origine, afin de bloquer le moyeu en rotation autour de l'axe central (XX') tout en conservant un degré de liberté en translation axiale par rapport audit axe central (XX').

8. Procédé selon l'une des revendications précédentes **caractérisé en ce que** l'on utilise, comme outil de mise en forme (20) pour ramollir par échauffement une portion du bouchon en matériau thermoplastique puis repousser le matériau thermoplastique ramolli dans la cavité femelle (10), un appareil à ultrasons, dit « sonotrode », dont la fréquence est supérieure à 20 kHz, de préférence supérieure à 30 kHz, et de préférence égale à 35 kHz.

9. Système de direction assistée (6) comprenant au moins un mécanisme logé dans un carter de direction (3) qui est obturé par un bouchon (4) conformément au procédé selon l'une quelconque des revendications 1 à 8.

## Patentansprüche

1. Verschlussverfahren, das es ermöglicht, eine Öffnung (1) mit einer Mittelachse (XX'), die in eine Wand (2), wie etwa eine Gehäusewand (3), gebohrt ist, mittels eines Stopfens (4) zu verschließen, der eine Gewindenabe (5) besitzt, die mit mindestens einem Gewinde (5T) versehen ist, wobei das Verfahren umfasst:
- einen Einschraubschritt (a), in dessen Verlauf die Gewindenabe (5) des Stopfens (4) in die Öffnung (1) eingeschraubt wird, indem das Gewinde (5T) der Nabe an der Wand (2) in einer als "Eindringrichtung" (D1) bezeichneten Richtung gegenüber einem elastischen Organ (9, 31) in Eingriff gebracht wird, welches auf die Nabe eine Rückstellkraft (F2) ausübt, die in eine als "Ausziehrichtung" (D2) bezeichnete entgegengesetzte Richtung gerichtet ist, derart, dass das elastische Organ (9, 31) dazu neigt, das Gewinde der Nabe (5T) in hinterer Auflage an die Wand (2) zurückzustellen, und das Einschrauben fortgesetzt wird, bis die Nabe (5) eine als "Tarierposition" (P0) bezeichnete gewünschte axiale Position erreicht, in der das Gewinde der Nabe (5T) durch das elastische Organ (9, 31) in hinterer Auflage an die Wand (2) gepresst wird,
- anschließend einen Drehverriegelungsschritt (b), in dessen Verlauf die Drehung der Gewindenabe (5) um die Mittelachse (XX') gesperrt wird, um sich dem Einschrauben und den Ausschrauben des Stopfens (4) zu widersetzen,
wobei das Verfahren **dadurch gekennzeichnet ist, dass** beim Drehverriegelungsschritt (b) ein Abschnitt des Stopfens (4) aus thermoplastischem Material erhitzt wird, um das thermoplastische Material zu erweichen, das erweichte thermoplastische Material dazu gezwungen wird, in einen weiblichen Hohlraum (10), der in der Wand der Öffnung ausgehöhlt ist, einzudringen und sich anschließend zu verfestigen, um ein männliches Organ (11) auszubilden, das sich in den weiblichen Hohlraum einfügt, wobei der weibliche Hohlraum (10) derart angeordnet ist, dass er gegenüber dem männlichen Organ (11) einen Führungsanschlag bildet, der einerseits die Drehung des männlichen Organs (11) und somit der Nabe (5) um die Mittelachse (XX') verhindert, um sich einer drehenden Einschraub- oder Ausschraubbewegung des Stopfens (4) zu widersetzen, der aber andererseits einen Axialverschiebungs-Freiheitsgrad des männlichen Organs (11) innerhalb des weiblichen Hohlraums (10) entlang der Mittelachse (XX') bewahrt, um kein Hindernis für ein Gleiten der Nabe (5) und ihres Gewindes (5T) gegenüber der Wand (2) entlang der Mittelachse (XX') darzustellen, dadurch, dass in der Wand ein weiblicher Hohlraum (10) vorgesehen wird, der von mindestens einer Kerbe (13) gebildet wird, die sich in die Öffnung (1) öffnet und die im Azimut um die Mittelachse (XX') von als Auflageflächen (10A, 10B) bezeichneten Flächen begrenzt wird, welche im Wesentlichen zur Mittelachse (XX') parallel sind, und dadurch, dass beim Drehverriegelungsschritt (b) das erweichte thermoplastische Material radial in die Kerbe (13) zurückgedrängt wird, um mindestens einen Zapfen (14) zu bilden, der ein männliches Organ (11) bildet, das in Bezug auf die Nabe radial vorspringt und das an den Auflageflächen (10A, 10B) in Gleitauflage kommt, um um die Mittelachse (XX') drehgesperrt zu sein, aber entlang der Mittelachse (XX') axial frei gleiten zu können, beim Drehverriegelungsschritt (b), um das thermoplastische Material zu erweichen und in den weiblichen Hohlraum (10) zurückzudrängen, ein Formwerkzeug (20) an den Stopfen (4) angelegt wird, das eine Eindrückkraft (F1) in der Eindringrichtung (D1) ausübt, wobei die Eindrückkraft (F1) so dazu neigt, das Gewinde der Nabe (5T) aus seiner hinteren Auflage zu lösen und den Stopfen (4) in der Eindringrichtung (D1) in Bezug auf die Tarierposition (P0) zu verlagern, anschließend dadurch, dass, sobald das männliche Organ (11) gebildet wurde, das Formwerkzeug (20) entfernt wird, um die Eindrückkraft (F1) aufzuheben und es der Nabe (5) und dem männlichen Organ (11) zu ermöglichen, unter der Wirkung des elastischen Organs (9, 31) eine Rückkehrbewegung in der Ausziehrichtung (D2) auszuführen, bis der Stopfen (4) seine anfängliche Tarierposition (P0) wiederfindet, mit dem Gewinde der Nabe (5T) in hinterer Auflage an die Wand (2) gepresst.

2. Verfahren nach Anspruch 1, **dadurch gekennzeichnet, dass** der weibliche Hohlraum (10) eine Vielzahl von getrennten Kerben (13) umfasst, die um die Mittelachse (XX') verteilt sind, und dadurch, dass beim Drehverriegelungsschritt (b) gleichzeitig eine Vielzahl von getrennten männlichen Zapfen (14) gebildet werden, die jeweils in eine der Kerben (13) eindringen und jeweils in Gleitauflage mit den Auflageflächen (10, 10B) ihrer jeweiligen Kerbe (13) zusammenwirken.

3. Verfahren nach Anspruch 2, in dessen Verlauf beim Drehverriegelungsschritt (b), um das thermoplastische Material zu erweichen und anschließend zurückzudrängen, ein Formwerkzeug (20) an den Stopfen (4) angelegt wird, das um die Mittelachse (XX') in ebenso viele Arme (21) unterteilt ist, wie männliche Zapfen (14) herzustellen sind, wobei jeder Arm (21) einen Winkelsektor abdeckt, der der Kerbe (13), die dem Arm zugeordnet ist, entspricht.

4. Verfahren nach einem der Ansprüche 1 bis 3, **dadurch gekennzeichnet, dass** die Nabe (5) des Stopfens (4) einen Umfangskranz (15) aus thermoplastischem Material aufweist, der einen auf der Mittelachse (XX') zentrierten Hohlzylinder bildet und der eine radial äußere Seite (15E), die mindestens zum Teil das Gewinde (5T) der Nabe trägt, sowie eine radial innere Seite (151) aufweist, die von außen zugänglich ist, wenn die Nabe (5) in die Öffnung (1) eingeschraubt wird, und dadurch, dass beim Drehverriegelungsschritt (b) der Kranz (15) an jedem Bereich, der winkelmäßig einer Kerbe (13) gegenüberliegt, teilweise erweicht und anschließend an jedem so erweichten Bereich das thermoplastische Material, aus dem der Kranz besteht, mindestens in einer radialen Zentrifugalrichtung zurückgedrängt wird, um das erweichte thermoplastische Material in die ihm entsprechende Kerbe (13) eindringen zu lassen und so einen männlichen Zapfen (14) auszubilden, der mit dem Kranz (15) einstückig ist.

5. Verfahren nach den Ansprüchen 3 und 4, **dadurch gekennzeichnet, dass** jeder Arm (21) ein Ende aufweist, das dazu bestimmt ist, mit der Kante (15A) des Kranzes (15) in Kontakt zu kommen, die sich radial zwischen einem inneren Radius (R15I), der der radial inneren Seite (151) des Kranzes entspricht, und einem radial äußeren Radius (R15E), der der radial äußeren Seite (15E) des Kranzes entspricht, erstreckt, und sich gemäß einer axialen Eindringbewegung in den Kranz (15) einzudrücken, um das erweichte thermoplastische Material allmählich in den weiblichen Hohlraum (10) zurückzudrängen, wobei das Ende (21) eine Prägung (23) aufweist, die im Schnitt in einer Längsschnittebene, welche die Mittelachse (XX') enthält, umfasst:
- einen ersten Rand (24), der so angeordnet ist, dass er als erster an einem radial äußeren Abschnitt der Kante (15A) des Kranzes in Auflage kommt, und der sich zu diesem Zweck radial zentrifugal von einem Zwischenradius (RM), der streng zwischen dem inneren Radius (R15I) und dem äußeren Radius (R15E) liegt, bis zum äußeren Radius (R15E) des Kranzes oder über diesen hinaus erstreckt, um die Energiezufuhr anfänglich nach außen zu konzentrieren und so das Erweichen und das zentrifugale radiale Wandern des thermoplastischen Materials zu begünstigen,
- einen geneigten Ablenker (26), der den ersten Rand 24 sowohl radial, in der radialen Zentrifugalrichtung, als auch axial in der Richtung der Eindringbewegung (D1) verlängert und der in Bezug auf die Mittelachse (XX') eine Formschräge (A26) bildet, um das erweichte thermoplastische Material radial nach außen führen und verdichten zu können, um beim axialen Eindrücken des Werkzeugs (20) in den Kranz (15) den vorspringenden Zapfen (14) an der radial äußeren Seite (15E) des Kranzes zu bilden.

6. Verfahren nach einem der Ansprüche 1 bis 5, **dadurch gekennzeichnet, dass** die Winkelabdeckung (A14) jedes Zapfens (14) im Azimut um die Mittelachse (XX') und an der Basis des Zapfens (14) an der radialen Grenze zwischen dem Stopfen (4) und der Kerbe (13) betrachtet kleiner oder gleich 30 Grad ist, und bevorzugt im Bereich zwischen 10 Grad und 20 Grad liegt.

7. Verfahren nach einem der vorstehenden Ansprüche, **dadurch gekennzeichnet, dass** es einen Zwangsentriegelungsschritt (c) umfasst, in dessen Verlauf ein am Stopfen vorgesehenes Handhabungsorgan (30), wie etwa eine männliche oder weibliche Innensechskantprägung, die an der Nabe gebildet ist, in Eingriff genommen und die Drehung der Nabe (5) um die Mittelachse (XX') erzwungen wird, indem das männliche Organ (11, 14) gebrochen wird, anschließend einen Einstellschritt (d), in dessen Verlauf die Nabe (5) eingeschraubt oder ausgeschraubt wird, um ihre axiale Position in Bezug auf die Öffnung (1) zu verändern, anschließend einen erneuten Drehverriegelungsschritt (b'), in dessen Verlauf, indem ein neuer Abschnitt aus thermoplastischem Material desselben Stopfens (4) erweicht und in den weiblichen Hohlraum (10) zurückgedrängt wird, ein neues männliches Organ (11', 14') gebildet wird, das in Bezug auf das ursprüngliche männliche Organ (11) winkelmäßig versetzt ist, um die Nabe um die Mittelachse (XX') drehzusperren, während zugleich ein Axialverschiebungs-Freiheitsgrad in Bezug auf die Mittelachse (XX') bewahrt wird.

8. Verfahren nach einem der vorstehenden Ansprüche, **dadurch gekennzeichnet, dass** als Formwerkzeug (20), um einen Abschnitt des Stopfens aus thermoplastischem Material durch Erhitzen zu erweichen und anschließend das erweichte thermoplastische Material in den weiblichen Hohlraum (10) zurückzudrängen, ein als "Sonotrode" bezeichnetes Ultraschallgerät verwendet wird, dessen Frequenz größer als 20 kHz, bevorzugt größer als 30 kHz und bevorzugt gleich 35 kHz ist.

9. Servolenksystem (6), das mindestens einen Mechanismus umfasst, der in einem Lenkgehäuse (3) untergebracht ist, das gemäß dem Verfahren nach einem der Ansprüche 1 bis 8 mit einem Stopfen (4) verschlossen ist.

## Claims

1. A plugging method allowing plugging an orifice (1) with a central axis (XX') pierced in a wall (2), such as a casing (3) wall, by means of a plug (4) having a threaded hub (5) provided with at least one thread (5T), said method comprising:
- a screwing step (a) during which the threaded hub (5) of the plug (4) is screwed into the orifice (1) by fitting the thread (5T) of said hub against the wall (2), in a direction called « penetration direction » (D1), against an elastic member (9, 31) which exerts on said hub a biasing force (F2) oriented in an opposite direction, called « extraction direction » (D2), such that said elastic member (9, 31) tends to urge the thread of the hub (5T) so as to bear at the rear against the wall (2), and the screwing is continued until the hub (5) reaches a desired axial position, called « calibration position » (PC), in which the thread of the hub (5T) is pressed so as to bear at the rear against the wall (2) by the elastic member (9, 31)
- then a rotational locking step (b), during which the rotation of the threaded hub (5) about the central axis (XX') is blocked in order to resist the screwing and unscrewing of the plug (4),
said method being **characterized in that**, at said rotational locking step (b), a portion of the plug (4) made of a thermoplastic material is heated up so as to soften said thermoplastic material, the softened thermoplastic material is forced to penetrate, and then to solidify, into a female cavity (10) drilled in the wall of the orifice in order to constitute a male member (11) which nests into said female cavity, the female cavity (10) being arranged such that it forms against the male member (11) a guide stop which, on the one hand, prevents the rotation of the male member (11), and therefore of the hub (5), about the central axis (XX'), so as to resist a screwing or unscrewing rotational movement of the plug (4), but which on the other hand keeps a degree of freedom in axial translation, along said central axis (XX'), of said male member (11) within said female cavity (10), so as not to hinder a sliding of the hub (5) and of its thread (5T) along the central axis (XX'), against the wall (2), **in that** there is provided, in the wall, a female cavity (10) formed by at least one notch (13) which opens onto the orifice (1) and which is delimited in azimuth around the central axis (XX') by surfaces, called bearing surfaces (10A, 10B), which are substantially parallel to said central axis (XX'), and **in that**, at the rotational locking step (b), the softened thermoplastic material is pushed radially into said notch (13) so as to form at least one lug (14) which forms a male member (11) projecting radially with respect to the hub and which slidably bears against said bearing surfaces (10A, 10B), so as to be blocked in rotation about the central axis (XX') but free to axially slide along the central axis (XX'), at the rotational locking step (b), a forming tool (20) which exerts an insertion force (F1) in the penetration direction (D1) is applied on the plug (4), to soften and push the thermoplastic material into the female cavity (10), said insertion force (F1) thus tending to peel off the thread of the hub (5T) from its back bearing, and to displace the plug (4) in the penetration direction (D1) relative to the calibration position (PC), and then **in that**, once the male member (11) is formed, the forming tool (20) is removed so as to release the insertion force (F1) and to enable the hub (5) and the male member (11) to perform, under the action of the elastic member (9, 31), a return movement in the extraction direction (D2), until the plug (4) recovers its initial calibration position (PC), with the thread of the hub (5T) pressed so as to bear at the rear against the wall (2).

2. The plugging method according to claim 1, **characterized in that** the female cavity (10) includes a plurality of distinct notches (13), distributed around the central axis (XX'), and **in that**, at the rotational locking step (b), there are simultaneously formed a plurality of distinct male lugs (14), each penetrating into one of said notches (13) and each cooperating by sliding bearing against the bearing surfaces (10, 10B) of their respective notch (13).

3. The plugging method according to claim 2, during which, at the rotational locking step (b), a forming tool (20) which is split, around the central axis (XX'), into as many arms (21) as there are male lugs (14) to be made, each arm (21) covering an angular sector which corresponds to the notch (13) that is assigned to said arm, is applied against the plug (4), to soften and then push the thermoplastic material.

4. The plugging method according to any of claims 1 to 3, **characterized in that** the hub (5) of the plug (4) has a peripheral crown (15) made of a thermoplastic material, which forms a hollow cylinder centered on the central axis (XX') and which has a radially outer face (15E) which carries at least partially the thread (5T) of the hub, as well as a radially inner face (151) which is accessible from the outside when the hub (5) is screwed into the orifice (1), and **in that**, at the rotational locking step (b), the crown (15) is partially softened, in each area located angularly with respect to a notch (13), and then, in each area thus softened, the thermoplastic material constitutive of the crown is pushed at least according to a centrifugal radial direction to make said softened thermoplastic material penetrate into the notch (13) corresponding thereto, and thus constitute a male lug (14) integral with the crown (15).

5. The plugging method according to claims 3 and 4, **characterized in that** each arm (21) has one end which is intended to come into contact with the edge (15A) of the crown (15) which extends radially between an inner radius (R151), corresponding to the radially inner face (151) of the crown, and a radially outer radius (R15E) corresponding to the radially outer face (15E) of said crown, and to fit into said crown (15) according to an axial penetration movement to progressively push the softened thermoplastic material into the female cavity (10), said end (21) having an imprint (23) which comprises, in a section in a longitudinal sectional plane containing the central axis (XX'):
- a first flange (24), arranged to be the first to bear against a radially outer portion of the edge (15A) of the crown, and which extends to this end in a centrifugal radial manner from an intermediate radius (RM) strictly comprised between the inner radius (R151) and the outer radius (R15E) up to, or beyond, the outer radius (R15E) of said crown, in order to initially concentrate the energy supply outwardly and thus promote the softening and the centrifugal radial migration of the thermoplastic material,
- an inclined deflector (26), which extends the first flange 24 both radially, in the centrifugal radial direction, and axially in the direction of the penetration movement (D1), and which forms a draft (A26) with respect to the central axis (XX'), so as to be able to guide radially outwards and compact the softened thermoplastic material in order to form the projecting lug (14) on the radially outer face (15E) of the crown, during the axial insertion of the tool (20) into the crown (15).

6. The plugging method according to any of claims 1 to 5, **characterized in that** the angular coverage (A14) of each lug (14), in azimuth around the central axis (XX'), and considered at the base of said lug (14) at the radial limit between the plug (4) and the notch (13), is smaller than or equal to 30 degrees, and preferably comprised between 10 degrees and 20 degrees.

7. The plugging method according to any of the preceding claims, **characterized in that** it comprises a forced unlocking step (c), during which a manipulating member (30) provided on the plug, such as a male or female hexagonal recess imprint formed on the hub is engaged and the rotation of the hub (5) about the central axis (XX') is forced by breaking the male member (11, 14), and then a setting step (d), during which the hub (5) is screwed or unscrewed in order to modify its axial position with respect to the orifice (1), and then a new rotational locking step (b') during which are formed, by softening and by pushing into the female cavity (10), a new portion made of a thermoplastic material of the same plug (4), a new male member (11', 14') which is angularly shifted with respect to the original male member (11), in order to block the hub in rotation about the central axis (XX') while keeping a degree of freedom in axial translation relative to said central axis (XX').

8. The plugging method according to any of the preceding claims, **characterized in that** an ultrasonic apparatus, called « sonotrode », whose frequency is higher than 20 kHz, preferably higher than 30 kHz, and preferably equal to 35 kHz, is used, as a forming tool (20) to soften by heat-up a portion of the plug made of a thermoplastic material and then push the softened thermoplastic material into the female cavity (10).

9. A power steering system (6) comprising at least one mechanism housed within a steering casing (3) which is plugged by a plug (4) in accordance with the plugging method according to any one of claims 1 to 9.
